(19) Europäisches Patentamt
European Patent Office
Office européen des brevets

(11) **EP 2 823 904 B1**

(12) **EUROPEAN PATENT SPECIFICATION**

(45) Date of publication and mention
of the grant of the patent:
**09.05.2018 Bulletin 2018/19**

(21) Application number: **13757886.0**

(22) Date of filing: **04.03.2013**

(51) Int Cl.:
*B21D 22/20* (2006.01)    *B21D 22/21* (2006.01)
*B21D 22/26* (2006.01)    *C21D 9/00* (2006.01)
*C21D 9/46* (2006.01)    *C22C 38/00* (2006.01)
*C22C 38/14* (2006.01)    *C22C 38/60* (2006.01)
*B21D 53/88* (2006.01)    *B62D 29/00* (2006.01)
*C21D 8/02* (2006.01)    *C21D 1/673* (2006.01)
*C22C 38/02* (2006.01)    *C22C 38/04* (2006.01)
*C22C 38/06* (2006.01)    *C22C 38/08* (2006.01)
*C22C 38/10* (2006.01)    *C22C 38/12* (2006.01)
*C22C 38/20* (2006.01)    *C22C 38/24* (2006.01)

(86) International application number:
**PCT/JP2013/001318**

(87) International publication number:
**WO 2013/132823 (12.09.2013 Gazette 2013/37)**

(54) **WARM PRESS FORMING METHOD FOR A STEEL**

WARMFORMPRESSMETHODE FÜR STAHL

PROCÉDÉ DE FORMAGE D'ACIER À LA PRESSE À CHAUD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.03.2012 JP 2012048724**

(43) Date of publication of application:
**14.01.2015 Bulletin 2015/03**

(73) Proprietor: **JFE Steel Corporation
Tokyo 100-0011 (JP)**

(72) Inventors:
• **TAMAI, Yoshikiyo**
**Tokyo 100-0011 (JP)**
• **TOKITA, Yuichi**
**Tokyo 100-0011 (JP)**
• **MINOTE, Toru**
**Tokyo 100-0011 (JP)**
• **FUJITA, Takeshi**
**Tokyo 100-0011 (JP)**

(74) Representative: **Stebbing, Timothy Charles
Haseltine Lake LLP
Lincoln House, 5th Floor
300 High Holborn
London WC1V 7JH (GB)**

(56) References cited:
JP-A- 2002 143 935    JP-A- 2003 113 442
JP-A- 2003 113 442    JP-A- 2006 212 663
JP-A- 2010 188 393    JP-A- 2010 188 393
JP-A- 2011 219 826    JP-A- 2013 023 721
US-A1- 2005 257 862

**Description**

TECHNICAL FIELD

The present invention relates to a warm press forming method that can suppress defects in dimensional accuracy due to geometric changes such as springback that occur in a high strength steel sheet being press-formed.
The present invention also relates to an automobile frame component produced by the warm press forming method.

BACKGROUND ART

To achieve a reduction in the weight of automobile body for improving fuel efficiency and an improvement in the crash safety of automobiles for protecting occupants, high strength steel sheets have been increasingly applied to automotive parts. It is generally known, however, that high strength steel sheets exhibit poor press formability, undergo considerable geometric changes (springback) caused by elastic recovery after being removed from the die, and are prone to defects in dimensional accuracy. Thus, there are currently a limited number of parts that can be obtained by applying press forming to high strength steel sheets.
Therefore, to improve press formability and shape fixability (to reduce springback), JP 2005-205416 A (PTL 1) discloses an example of hot press forming being applied to a high strength steel sheet in which a steel sheet is press-formed after being heated to a predetermined temperature.
JP 2006-212663 A discloses a method for hot-pressing a high strength steel capable of being subjected to continuous pressing for two or more times and having excellent productivity and formability, comprising the steps of heating up a steel to 750 to 1,300°C, holding for 10 to 6,000 s, and thereafter press forming at 300°C for two or more times.

CITATION LIST

Patent Literature

PTL 1: JP 2005-205416 A

SUMMARY OF INVENTION

(Technical Problem)

The aforementioned hot press forming involves forming of a steel sheet at temperatures higher than those at which cold press forming is performed, so as to reduce the deformation resistance of the steel sheet for press forming, in other words, to increase the deformation capacity thereof, aiming to improve the shape fixability and at the same time prevent the occurrence of press cracking.
With the hot press forming disclosed in PTL 1, however, press forming is based on draw forming. In the draw forming, edges of the heated steel sheet (which will be also called "blank") are compressed between a die and a blank holder during the formation process, and accordingly the edges of the blank and other portions thereof contact with, e.g., the die for different times. In addition, a drop in the temperature of the contact zone of the blank during the press forming process leads to a non-uniform temperature distribution in the press-formed part immediately after the formation (hereinafter also called "panel") due to the difference in the contact time with the aforementioned die, and so on. This results in a problem that panels, in particular, automobile frame components to which high strength steel sheets are applied, undergo geometric changes during the air cooling process after the hot press forming, which prevents the provision of panels with sufficiently satisfactory dimensional accuracy.
In addition, general hot press forming involves heating of a steel sheet to the austenite region as well as cooling of the steel sheet accompanying quenching and phase transformation, and consequently, the microstructure of the steel sheet tends to change after the formation, causing the problem of large variations in the tensile properties, such as strength and ductility, of the press-formed part.
The present invention has been developed to solve the aforementioned problem, and an object of the present invention is to provide a warm press forming method that can suppress geometric changes such as springback that occur in a panel, thereby improving the dimensional accuracy of the panel and obtaining the desired mechanical properties in the press-formed part. Another object of the present invention is to provide an automobile frame component produced by the warm press forming method.

(Solution to Problem)

To solve the aforementioned problem, when a high strength steel sheet is applied, the present inventors tried to limit the heating temperature of the high strength steel sheet, which would otherwise need to be heated to the austenite region with conventional hot press forming, below the austenite transformation temperature.
In addition to this, the present inventors have made intensive studies on forming methods and forming conditions to determine the conditions under which geometric changes caused by springback can be suppressed.
As a result, the inventors discovered that when forming a high strength steel sheet into a press-formed part including flange portions and other portions by press forming, the intended results can be obtained advantageously by:

(1) heating a steel sheet to a so-called warm-forming temperature range;
(2) then press-forming the heated steel sheet by using crash forming to obtain a press-formed part; and
(3) during the press-forming, controlling the difference in average temperature among flange portions and other portions of the press-formed part immediately after the formation to be within a predetermined range.

The present invention is based on the aforementioned discoveries.
Specifically, the primary features of the present invention are as described below.

[1] A warm press forming method for forming a steel sheet having a tensile strength of 440 MPa or more into a press-formed part including flange portions and other portions by press forming, the method comprising:

heating the steel sheet to a temperature range of 400 °C to not exceeding 700 °C; and
then press-forming the heated steel sheet by using crash forming to obtain a press-formed part, in such a way that a difference in average temperature among flange portions and other portions of the press-formed part immediately after the formation is kept within 100 °C.

[2] The warm press forming method according to the aspect [1], wherein the press-formed part has a tensile strength of 80 % to 110 % of a tensile strength of the steel sheet before press forming.
[3] The warm press forming method according to the aspect [1] or [2], wherein the steel sheet has a chemical composition containing, by mass%,
C: 0.015 % to 0.16 %,
Si: 0.2 % or less,
Mn: 1.8 % or less,
P: 0.035 % or less,
S: 0.01 % or less,
Al: 0.1 % or less,
N: 0.01 % or less, and
Ti: 0.13 % to 0.25 %,
provided that a relation defined by Expression (1) below is satisfied, and optionally, by mass%, at least one selected from
V: 1.0 % or less,
Mo: 0.5 % or less,
W: 1.0 % or less,
Nb: 0.1 % or less,
Zr: 0.1 % or less, and
Hf: 0.1 % or less,
provided that a relation defined by Expression (1)' is satisfied,
B: 0.003 % or less,
at least one selected from Mg: 0.2 % or less, Ca: 0.2 % or less, Y: 0.2 % or less, and REM: 0.2 % or less,
at least one selected from Sb: 0.1 % or less, Cu: 0.5 % or less, and Sn: 0.1 % or less,
at least one selected from Ni: 0.5 % or less and Cr: 0.5 % or less, and
at least one selected from O, Se, Te, Po, As, Bi, Ge, Pb, Ga, In, Tl, Zn, Cd, Hg, Ag, Au, Pd, Pt, Co, Rh, Ir, Ru, Os, Tc, Re, Ta, Be and Sr, in a total amount of 2.0 % or less,
the balance including Fe and incidental impurities, and
wherein the steel sheet has a microstructure containing a ferrite phase by 95 % or more on an area ratio basis with respect to the entire microstructure, ferrite crystal grains constituting the ferrite phase have an average grain size of 1 $\mu$m or more, and carbides having an average particle size of 10 nm or less are dispersed and precipitated in the ferrite crystal grains

$$2.00 \geq ([\%C] / 12) / ([\%Ti] / 48) \geq 1.05 \qquad \text{Expression (1)},$$

$$2.00 \geq ([\%C] / 12) / ([\%Ti] / 48 + [\%V] / 51 + [\%W] / 184 + [\%Mo] /$$

$$96 + [\%Nb] / 93 + [\%Zr] / 91 + [\%Hf] / 179) \geq 1.05$$

$$\text{Expression (1)}'$$

where [%M] indicates the content by mass% of element M.

[4] The warm press forming method according to any one of the aspects [1] to [3], wherein the steel sheet comprises a coating or plating layer on a surface thereof.

[5] The warm press forming method according to any one of the aspects [1] to [4], wherein during the crash forming, the steel sheet is held at a press bottom dead point in the die for one second or more.

[6] An automobile frame component produced by the warm press forming method according to any one of the aspects [1] to [5].

(Advantageous Effect of Invention)

According to the present invention, it is possible to suppress geometric changes made to a panel being air-cooled after the press forming process, allowing manufacture of automobile frame components having good dimensional accuracy with high productivity. Consequently, high strength steel sheets, which could not conventionally be applied to automobile frame components due to defects in dimensional accuracy, can be applied thereto to allow a reduction in weight of automotive body, which may greatly contribute to solving environmental issues.

In addition, the warm press forming according to the present invention does not involve quenching and/or phase transformation before and after the forming process and can directly make use of the mechanical properties of steel sheets as blank material, thereby allowing for stable production of press-formed parts with desired properties.

BRIEF DESCRIPTION OF DRAWINGS

The present invention will be further described below with reference to the accompanying drawings, wherein:

FIG. 1 is a diagram illustrating a press forming process using draw forming, where (a) shows a state when the forming process starts, (b) shows a state during the forming process, and (c) shows a state at the press bottom dead point (a state when the forming process ends);

FIG. 2(a) illustrates an exemplary automobile frame component produced from a panel obtained by press forming;

FIG. 2(b) illustrates flange portions of a panel obtained by press forming using draw forming;

FIG. 3 illustrates a press forming process using crash forming, where (a) shows a state when the forming process starts, (b) shows a state during the forming process, and (c) shows a state at the press bottom dead point (a state when the forming process ends);

FIG. 4 is a graph showing a difference in average temperature among flange portions and other portions of panels obtained by warm press forming using crash forming and draw forming, respectively;

FIG. 5(a) is a graph showing the relationship between the difference in average temperature among flange portions and other portions of a panel obtained by warm press forming using crash forming and the amount of geometric changes made to the panel from the time immediately after press forming (the time when the panel was removed from the die) until the end of air cooling;

FIG. 5(b) is a diagram for explaining the amount of geometric changes made to the panel from the time immediately after press forming (the time when the panel was removed from the die) until the end of air cooling;

FIG. 6(a) schematically illustrates a center pillar upper press panel; and

FIG. 6(b) is a diagram for explaining the amount of geometric changes made to the panel from the time immediately after press forming (the time when the panel was removed from the die) until the end of air cooling.

DESCRIPTION OF EMBODIMENTS

The present invention will be described in detail below.

Firstly, the reasons for heating a steel sheet to temperatures in the range of 400 °C to not exceeding 700 °C prior to press forming in the present invention will be described below.

**Heating Temperature of Steel Sheet: 400 °C to not exceeding 700 °C**

In the present invention, press forming is performed by using crash forming. The crash forming is more prone to wrinkle formation in flange portions than draw forming, yet wrinkle formation may be suppressed by heating the steel sheet to 400 °C or higher. If the heating temperature of the steel sheet exceeds 700 °C, however, the material strength is reduced so much as to incur the risk of cracking, fracture, and the like. Therefore, the heating temperature of the steel sheet is defined to be in the range of 400 °C to not exceeding 700 °C. In particular, when the heating temperature of the steel sheet is 400 °C or higher and lower than 650 °C, it is possible to suppress oxidation of surfaces of the steel sheet and/or formation of cracks, and furthermore, to prevent an excessive increase in press load, which is still more advantageous.

Secondly, the reasons for using crash forming as a warm press forming method and controlling the difference in average temperature among flange portions and other portions of a press-formed part immediately after the formation to be 100 °C or lower in the present invention will be described below.

As used herein, the term "difference in average temperature" means a difference in average temperature immediately after press forming, unless otherwise specified. As used herein, the phrase "immediately after press forming" refers to a point in time that represents the start of air cooling of a panel after being removed from the die. In addition, the term "the amount of geometric changes" means a difference (variation) between the geometry of a panel at the time it was removed from the die immediately after warm press forming and the geometry of the panel after air cooling.

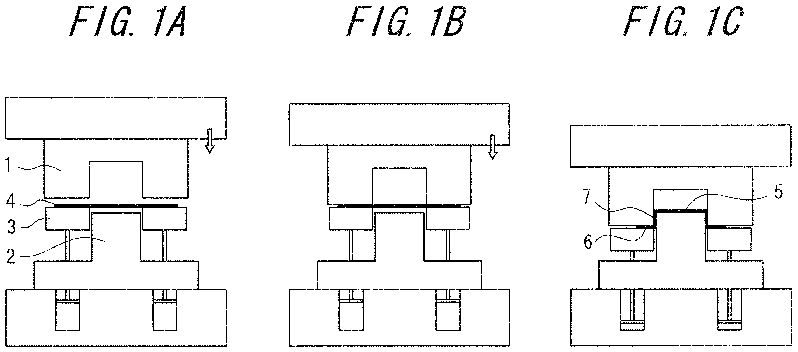

For a panel requiring high sidewall portions, press forming is usually performed using draw forming. In performing the draw forming, even a warm (or hot) press forming process is generally carried out by means of a blank holder arranged as shown in FIG. 1 so as to suppress wrinkles that would occur during the forming process, while applying tension to sidewall portions with edges of the blank being compressed among the blank holder and the upper die.

In FIG. 1, a die is labeled 1, a punch is labeled 2, a blank holder is labeled 3, a heated steel sheet (blank) is labeled 4, a press-formed part (panel) after the formation is labeled 5, flange portions are labeled 6, and sidewall portions are labeled 7.

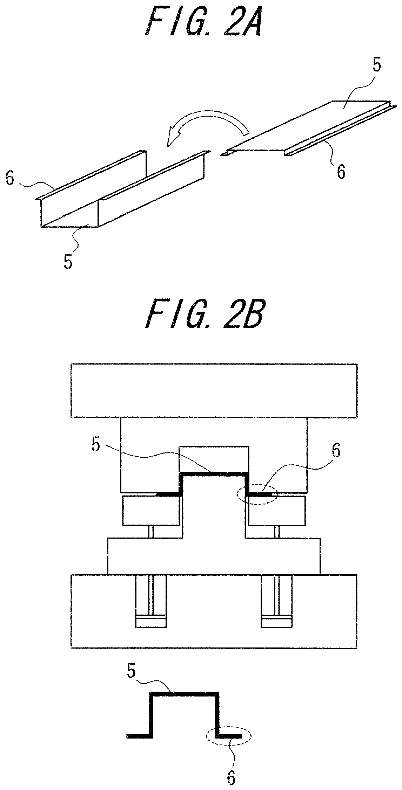

As shown in FIG. 2(a), for example, an automobile frame component is often worked to form a closed cross section by joining members having a substantially hat-shaped cross section by spot welding and the like. In this case, the edges of the blank compressed as shown in FIG. 2(b) provide flange portions of the panel after the formation. The flange portions are required to be flat since they are points at which panels are joined together by spot welding and the like. This is the reason why the formation is performed while applying blank holding force to edges of the blank as mentioned above.

In the case of the aforementioned draw forming, the edges of the blank are continuously compressed among the blank holder and the upper die from the early stage of the forming process until the completion of the process. Consequently, the heated steel sheet (blank) is subject to a heat transfer from edges of the blank to the die during the press forming process, with the result that the edges of the blank are susceptible to a temperature drop, leading to a large difference in temperature among flange portions and other portions of the panel immediately after the formation.

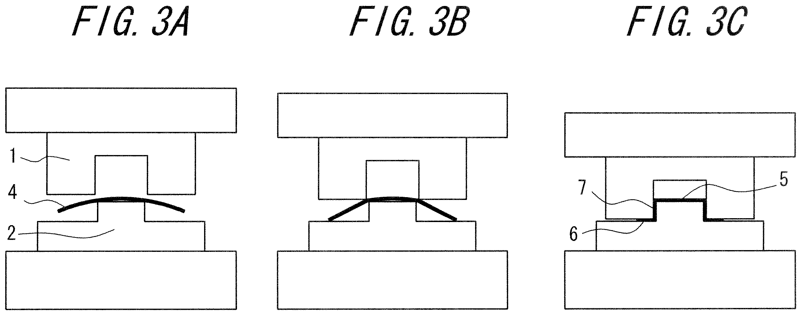

Such a difference in temperature in the panel results in different rates of thermal contraction at different points in the panel in the course of cooling to room temperature, and consequently, causes residual stress in the panel, which in turn is subject to geometric changes to release the stress. The present inventors have identified this mechanism as the major cause of geometric changes that would occur during the cooling process, and conceived of performing press forming using crash forming as shown in FIG. 3, which does not need a blank holder and with which a reduction in temperature drop at edges of the blank can be achieved.

Here, in the case of crash forming, flange portions are not compressed continuously during the forming process. Therefore, crash forming has an advantage in that a temperature difference is less likely made in the panel immediately after the formation.

In addition, although flange portions are more susceptible to wrinkle formation with crash forming than with draw forming, the strength of the blank may be lowered under a warm forming condition, with the result that the blank tends to deform in conformity with the die during the press forming process, which makes it possible to avoid wrinkle formation.

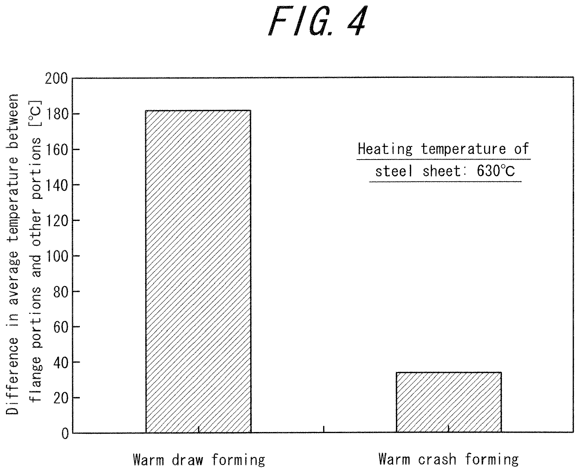

FIG. 4 is a graph showing a difference in average temperature among flange portions and other portions of those panels having a substantially hat-shaped cross section that were obtained by warm press forming using crash forming and draw forming, respectively. It should be noted that all of the steel sheets were heated to 630 °C prior to forming and none of these were held at the press bottom dead point.

As shown in FIG. 4, the aforementioned difference in average temperature is substantially reduced with crash forming as compared with draw forming. From this, it can be seen that warm crash forming may lead to a smaller temperature difference in the panel and is effective for suppressing geometric changes that would occur during the cooling process.

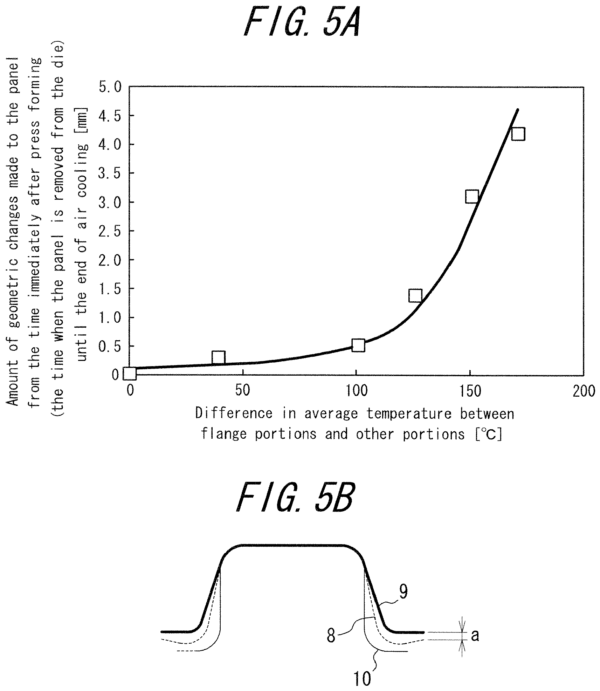

Further, FIG. 5(a) is a graph showing the relationship among the difference in average temperature among flange portions and other portions of a panel having a substantially hat-shaped cross section immediately after warm press forming using crash forming and the amount of geometric changes made to the panel from the time immediately after press forming until the end of air cooling. In this case, the pressing speed was adjusted to make the aforementioned difference in average temperature. In addition, the aforementioned amount of geometric changes was determined by an opening amount a, which was measured at the edges of the flanges in relation to a reference panel (a panel removed from the die immediately after press forming), as shown in FIG. 5(b). In the figure, a reference panel is labeled 8 (dashed line), an air-cooled panel is labeled 9 (thick solid line), and a panel at the press bottom dead point is labeled 10 (thin solid line).

It can be seen from FIG. 5(a) that the larger the aforementioned difference in average temperature in a panel, the larger the amount of geometric changes made to the panel from the time it is removed from the die immediately after press forming until the end of air cooling. In particular, a sharp increase in the amount of geometric changes occurs where the difference in average temperature exceeds 100 °C, it is important that the difference in average temperature be kept within 100 °C, preferably within 70 °C, for reducing the amount of geometric changes caused by the temperature difference in the panel.

To keep the difference in average temperature within 100 °C, it suffices to conduct crash forming while setting the heating temperature of the steel sheet in the range of 400 °C to not exceeding 700 °C. At this moment, it is necessary to consider the crash forming conditions, such as pressing speed and die temperature. Note that the pressing speed is preferably in the range of about 10 spm to 15 spm (strokes per minute, which represents the number of parts that can be formed in one minute plus any additional time, if applicable, taken to hold parts at the press bottom dead point).

In addition, if a warm press forming process is performed by using crash forming while setting the heating temperature of the steel sheet to be in the range of 400 °C to not exceeding 700 °C, the aforementioned difference in average temperature may be kept within 100 °C even if the steel sheet is not held at the press bottom dead point, in other words, if the holding time at the press bottom dead point is equal to 0 seconds. Therefore, this is extremely advantageous in terms of productivity.

On the other hand, if the holding time at the press bottom dead point is set to be one second or more, the temperature of the panel begins to drop in response to contact with the die, whereas the temperature in the panel becomes more homogenized so that the aforementioned difference in average temperature becomes smaller. Therefore, this is advantageous in terms of shape fixability. In addition, the constraint of the flange portions is advantageous in terms of suppressing wrinkle formation. Consequently, the holding time at the press bottom dead point in the die is preferably set to be one second or more, in particular, when high accuracy is required. Note that the holding time is preferably set to be 5 seconds or less because a too long holding time degrades the productivity.

Other than the above the forming conditions are not particularly limited, yet it is suffice to follow the conventional methods. It is assumed that the heating of the steel sheet has the same effect irrespective of the heating method used, such as heating in an electric furnace, electrical heating, and rapid heating using far infrared heating.

In addition, as mentioned earlier, the warm press forming method according to the present invention is applied to a steel sheet having a tensile strength of 440 MPa or more. Further, the warm press forming method according to the present invention may preferably be applied to a steel sheet having a tensile strength of 780 MPa or more, and even 980 MPa or more.

Additionally, as mentioned earlier, the warm press forming method according to the present invention makes it possible to directly make use of the mechanical properties of steel sheets as blanks, thereby allowing each panel obtained by press forming of a steel sheet to have a tensile strength of 80 % to 110 % of that of the steel sheet before press forming.

Furthermore, it is possible to obtain a press-formed part that retains, even after the press forming process, a tensile strength which is almost as high as that of the steel sheet before press forming (or, that has a tensile strength of 95 % to 100 % of the tensile strength of the steel sheet prior to the press forming process), depending on the forming conditions and the properties of the steel sheet.

Therefore, depending on the properties required for press-formed parts, the use of steel sheets having the corresponding properties as blanks allows for stable production of press-formed parts with desired properties.

The chemical composition ranges of a steel sheet that can preferably be used as a blank in the present invention will be described below. Note that the unit "%" of each component is "mass%" unless otherwise specified.

**C: 0.015 % to 0.16 %**

Carbon (C) is an important element in that it forms carbides with other elements, such as Ti, V, Mo, W, Nb, Zr, and Hf, which exhibit fine particle distribution in the matrix to thereby increase the strength of a steel sheet. In this case, to achieve a tensile strength as high as 440 MPa or more, the content of C in steel is preferably 0.015 % or more. However, if the content of C exceeds 0.16 %, the ductility and toughness are significantly reduced, which makes it impossible to ensure good impact absorption ability (such as expressed by "tensile strength TS × total elongation El"). Therefore, the content of C is preferably in the range of 0.015 % to 0.16 %, more preferably in the range of 0.03 % to 0.16 %, and still more preferably in the range of 0.04 % to 0.14 %.

**Si: 0.2 % or less**

Silicon (Si) is a solid-solution-strengthening element that suppresses the reduction of strength in a high temperature range, and consequently adversely affects the formability in a warm-forming temperature range (warm formability). Therefore, the content of Si in steel is preferably kept as low as possible in the present invention, but a Si content of up to 0.2 % is tolerable. In view of this, the content of Si is preferably 0.2 % or less, more preferably 0.1 % or less, and still more preferably 0.06 % or less. Note that the content of Si may be reduced to impurity level.

**Mn: 1.8 % or less**

Manganese (Mn) is also a solid-solution-strengthening element, like Si, that suppresses the reduction of strength in a high temperature range, and consequently adversely affects the formability in a warm forming temperature range (warm formability). Therefore, the content of Mn in steel is preferably kept as low as possible in the present invention, but a Mn content of up to 1.8 % is tolerable. In view of this, the content of Mn is preferably 1.8 % or less, more preferably 1.3 % or less, and still more preferably 1.1 % or less. Note that if the content of Mn is too low, the austenite ($\gamma$) to ferrite ($\alpha$) transformation temperature may rise excessively, which could lead to coarsening of carbides. Therefore, the content of Mn is preferably 0.5 % or more.

**P: 0.035 % or less**

Phosphorus (P) is an element that has a very high, solid-solution-strengthening ability, suppresses the reduction of strength in a high temperature range, and consequently adversely affects the formability in a warm forming temperature range (warm formability). Additionally, P exists in a segregated manner at grain boundaries, thereby lowering the ductility during and after warm forming. In view of this, the content of P in steel is preferably kept as low as possible, but a P content of up to 0.035 % is tolerable. Accordingly, the content of P is preferably 0.035 % or less, more preferably 0.03 % or less, and still more preferably 0.02 % or less.

**S: 0.01 % or less**

Sulfur (S) is an element that exists as inclusion in steel. S reduces the strength of the steel sheet when bonded to Ti, while forming sulfides when bonded to Mn, leading to a reduction of the ductility of the steel sheet at room temperature, under warm condition, and the like. Therefore, the content of S is preferably kept as low as possible, but a S content of up to 0.01 % is tolerable. Accordingly, the content of S is preferably 0.01 % or less, more preferably 0.005 % or less, and still more preferably 0.004 % or less.

**Al: 0.1 % or less**

Aluminum (Al) is an element that acts as a deoxidizer. To obtain this effect, it is desirable that Al is contained in steel by 0.02 % or more. However, if the content of Al exceeds 0.1 %, more oxide-based inclusions form, significantly reducing the ductility under warm condition. Therefore, the content of Al is preferably 0.1 % or less, and more preferably 0.07 % or less.

**N: 0.01 % or less**

Nitrogen (N) is an element that forms coarse nitrides when bonded to Ti, Nb, and the like at the steelmaking stage. Accordingly, the strength of the steel sheet significantly decreases if it contains a large amount of N. In view of this, the content of N is preferably kept as low as possible, but a N content of up to 0.01 % is tolerable. Therefore, the content of N is preferably 0.01 % or less, and more preferably 0.007 % or less.

**Ti: 0.13 % to 0.25 %**

Titanium (Ti) is an element that forms carbides when bonded to C and thereby contributes to increased strength of the steel sheet. To ensure that the steel sheet has a tensile strength as high as 440 MPa or more at room temperature, as targeted by the present invention, the content of Ti is preferably 0.13 % or more. On the other hand, if the content of Ti exceeds 0.25 %, coarse TiC particles remain and micro voids form during heating of the steel material. Therefore, the content of Ti is preferably 0.25 % or less, more preferably 0.14 % to 0.22 %, and still more preferably 0.15 % to 0.22 %.

In the foregoing, the preferred composition ranges of the components of the present invention have been described. However, it does not suffice for the components to only satisfy the aforementioned ranges, and it is also important for C and Ti, in particular, to satisfy Expression (1):

$$2.00 \geq ([\%C] / 12) / ([\%Ti] / 48) \geq 1.05 \qquad \text{Expression (1)}$$

, where [%M] indicates the content by mass% of element M.

That is, Equation (1) is a requirement to enable the strengthening by precipitation with carbides, which will be described later, and to ensure a high strength as desired after warm forming. When the contents of C and Ti satisfy Equation (1), it is possible to allow precipitation of a desired amount of carbides, thereby ensuring a high strength as desired.

In addition, if the result of ([%C] / 12) / ([%Ti] / 48) is less than 1.05, not only does the grain boundary strength decrease, but also the carbides exhibit lower thermal stability upon heating. Accordingly, the carbides are more prone to coarsening, which makes it impossible to achieve a high strength as desired. On the other hand, if the result of ([%C] / 12) / ([%Ti] / 48) exceeds 2.00, cementite precipitates excessively. This results in formation of micro voids, and consequently cause cracks during warm forming. Note that the result of ([%C] / 12) / ([%Ti] / 48) is more preferably in the range of 1.05 to 1.85.

In addition to the aforementioned basic components, the steel sheet that can preferably be used in the warm press forming method according to the present invention may optionally contain the following elements as appropriate.

**At least one selected from V: 1.0 % or less, Mo: 0.5 % or less, W: 1.0 % or less, Nb: 0.1 % or less, Zr: 0.1 % or less, and Hf: 0.1 % or less**

Vanadium (V), molybdenum (Mo), tungsten (W), niobium (Nb), zirconium (Zr), and hafnium (Hf) are elements, like Ti, that form carbides to contribute to increasing the strength of the steel sheet. Therefore, the steel sheet may contain at least one element in addition to Ti, selected from V, Mo, W, Nb, Zr, and Hf, if a further enhancement of its strength is required. To obtain this effect, it is preferred that the content of V is 0.01 % or more, the content of Mo is 0.01 % or more, the content of W is 0.01 % or more, the content of Nb is 0.01 % or more, the content of Zr is 0.01 % or more, and the content of Hf is 0.01 % or more.

On the other hand, if the content of V exceeds 1.0 %, carbides are more prone to coarsening; in particular, coarsening of carbides in a warm-forming temperature range makes it difficult to control the average particle size of the carbides after being cooled to room temperature to be 10 nm or less. Accordingly, the content of V is preferably 1.0 % or less, more preferably 0.5 % or less, and still more preferably 0.2 % or less.

In addition, if the contents of Mo and W are more than 0.5 % and 1.0 %, respectively, the $\gamma$-to-$\alpha$ transformation is exceedingly delayed. As a result, bainite phase and martensite phase exist in a mixed manner in the microstructure of the steel sheet, which makes it difficult to obtain ferrite single phase, which will be described later. In view of this, the contents of Mo and W are preferably 0.5 % or less and 1.0 % or less, respectively. Additionally, if Nb, Zr, and Hf are contained in steel by more than 0.1 %, respectively, coarse carbides are not completely dissolved and remain in slab being reheated. Consequently, micro voids form more easily during warm forming. In view of this, the contents of Nb, Zr, and Hf are preferably 0.1 % or less, respectively.

Note that if the above elements are also contained in steel, the following Expression (1)', instead of Expression (1), needs to be satisfied. The reason for this requirement is the same as stated in conjunction with Expression (1).

$$2.00 \geq ([\%C] / 12) / ([\%Ti] / 48 + [\%V] / 51 + [\%W] / 184 + [\%Mo] / 96 + [\%Nb] / 93 + [\%Zr] / 91 + [\%Hf] / 179) \geq 1.05$$

$$\text{Expression (1)}'$$

, where [%M] indicates the content by mass% of element M.

Furthermore, the steel sheet that can preferably be used in the warm press forming method according to the present invention may optionally contain the following elements as appropriate.

**B: 0.003 % or less**

Boron (B) is an element that acts to inhibit nucleation of the $\gamma$-to-$\alpha$ transformation to lower the $\gamma$-to-$\alpha$ transformation point, thereby contributing to the refinement of carbides. To obtain this effect, it is desirable that the content of B is 0.0002 % or more. However, containing over 0.003 % of B does not increase this effect, but is rather economically disadvantageous. Therefore, the content of B is preferably 0.003 % or less, and more preferably 0.002 % or less.

**At least one selected from Mg: 0.2 % or less, Ca: 0.2 % or less, Y: 0.2 % or less, and REM: 0.2 % or less**

Magnesium (Mg), calcium (Ca), yttrium (Y), and REM all act as refining inclusions, which action provides an effect of suppressing stress concentration in the vicinity of inclusions and the base material during the warm forming process, and thereby improving the ductility. Therefore, these elements may optionally be contained in steel. Note that the REM, which is an abbreviation for Rare Earth Metal, represents lanthanoid elements.

However, if Mg, Ca, Y, and REM are contained in steel in an excessive amount over 0.2 %, respectively, these elements compromise castability (which is the ability of a molten steel to flow through a mold before solidification; higher castability represents better flowability of a molten steel), rather leading to lower ductility. It is thus preferred that the content of Mg is 0.2 % or less, the content of Ca is 0.2 % or less, the content of Y is 0.2 % or less, and the content of REM is 0.2 % or less. More preferably, the content of Mg is in the range of 0.001 % to 0.1 %, the content of Ca is in the range of 0.001 % to 0.1 %, the content of Y is in the range of 0.001 % to 0.1 %, and the content of REM is in the range of 0.001 % to 0.1 %.

It is also desirable that the total amount of these elements is adjusted to be 0.2 % or less, and more preferably 0.1 % or less.

**At least one selected from Sb: 0.1 % or less, Cu: 0.5 % or less, and Sn: 0.1 % or less**

Antimony (Sb), copper (Cu), and tin (Sn) are elements that concentrate near surfaces of a steel sheet and has an effect of suppressing softening of the steel sheet that would be caused by nitriding of the surfaces of the steel sheet during warm forming. Therefore, at least one of these elements may optionally be contained in steel. Note that Cu is also effective for improving anti-corrosion property. To obtain this effect, it is desirable that Sb, Cu, and Sn are contained in steel by 0.005 % or more, respectively. However, if Sb, Cu, and Sn are contained in steel in excessive amounts over 0.1 %, 0.5 %, and 0.1%, respectively, the resulting steel sheet has a poor surface texture. Therefore, it is preferred that the content of Sb is 0.1 % or less, the content of Cu is 0.5 % or less, and the content of Sn is 0.1 % or less.

**At least one selected from Ni: 0.5 % or less and Cr: 0.5 % or less**

Both Ni and Cr are elements that contribute to increased strength of steel. At least one of these elements may optionally be contained in steel. Here, Ni is an austenite-stabilizing element that suppresses formation of ferrite at high temperature and contributes to increased strength of the steel sheet. In addition, Cr is a quench-hardenability-improving element that suppresses, as is the case with Ni, formation of ferrite at high temperature and contributes to increased strength of the steel sheet.

To obtain this effect, it is preferred that Ni and Cr are contained in steel by 0.01 % or more. However, if Ni and Cr are contained in steel in an excessive amount over 0.5 %, respectively, formation of a low temperature transformation phase, such as martensite phase and bainite phase, is induced. A low temperature transformation phase, such as martensite phase and bainite phase, shows recovery during heating, thereby causing a reduction in the strength after warm forming. To obtain this effect, it is preferred that Ni and Cr are contained in steel by 0.5 % or less, and more preferably by 0.3 % or less, respectively.

**At least one selected from O, Se, Te, Po, As, Bi, Ge, Pb, Ga, In, Tl, Zn, Cd, Hg, Ag, Au, Pd, Pt, Co, Rh, Ir, Ru, Os, Tc, Re, Ta, Be and Sr in a total amount of 2.0 % or less**

A total amount of 2.0 % or less of the above elements is tolerable since it does not affect the strength or warm formability of the steel sheet. The total amount is more preferably 1.0 % or less.

The balance other than the aforementioned components includes Fe and incidental impurities.

Next, a preferred microstructure of the aforementioned steel sheet will be described.

**Area ratio of ferrite phase with respect to the entire microstructure: 95 % or more**

In the present invention, the steel sheet has a metal structure of ferrite single phase. As used herein, the term "ferrite single phase" is not only intended to represent a situation where the area ratio of ferrite phase is 100 %, but also to encompass a substantially ferrite single phase where the area ratio of ferrite phase is 95 % or more.

For the steel sheet having a ferrite single phase as its metal structure, it is possible to retain excellent ductility and even suppress changes to the material properties caused by heating. The coexistence of hard phases, such as bainite phase and martensite phase, in the microstructure causes recovery of dislocations introduced to the hard phases by heating, and consequently the hard phases soften, which makes it impossible to maintain the strength of the steel sheet even after warm forming. Accordingly, the absence of pearlite, bainite phase, and martensite phase delivers better results, although the coexistence of such hard phases and even a retained austenite phase is tolerable as long as the area ratio of these phases with respect to the entire microstructure is 5 % or less.

In this case, if a steel sheet has a metal structure of substantially ferrite single phase, the metal structure remains as substantially ferrite single phase even when the steel sheet is heated to a temperature range of 400 °C to 700 °C (warm-forming temperature range). Additionally, the aforementioned steel sheet may show an increase in ductility as it is heated, achieving good total elongation in the warm-forming temperature range.

Moreover, in the case where the steel sheet is subjected to a forming process in the warm-forming temperature range, the forming process is conducted in connection with recovery of dislocation, and consequently, with little reduction in ductility during warm forming. Furthermore, since the steel sheet does not show any microstructural changes even when cooled to room temperature after warm forming, it maintains the metal structure of substantially ferrite single phase and exhibits excellent ductility.

### Average grain size of ferrite: 1 μm or more

For ferrite having an average grain size of less than 1 μm, crystal grains tend to grow during warm forming, with the result that the material properties of a press-formed part after the warm forming process considerably differ from those observed before the warm forming, reducing the stability of the steel sheet as a material. Therefore, ferrite preferably has an average grain size of 1 μm or more.

On the other hand, if ferrite has an excessively large, average grain size over 15 μm, it is not possible to achieve strengthening through grain refinement of the microstructure, which makes it difficult to ensure a desired strength of the steel sheet. Therefore, ferrite preferably has an average grain size of 15 μm or less, and more preferably 12 μm or less.

For obtaining a microstructure with ferrite having an average grain size of 1 μm or more, it is effective to prevent nucleation sites for ferrite from excessively increasing in number. The number of nucleation sites is closely related to the amount of strain energy to be stored in the steel sheet during the rolling process. Consequently, for preventing refinement of ferrite grains, it is necessary to prevent excessive storage of strain energy. To this end, the finisher delivery temperature is preferably set to be 840 °C or higher.

### Average particle size of carbides in the ferrite crystal grains: 10 nm or less

With the aforementioned ferrite single phase structure, it is difficult to obtain a steel sheet having a sufficiently high tensile strength and/or yield ratio. In this regard, the strength of the steel sheet may be increased by allowing fine carbides having an average particle size of 10 nm or less to be precipitated in the ferrite crystal grains. In this case, if the average particle size of the carbides is more than 10 nm, it is difficult to obtain the aforementioned high tensile strength and/or yield ratio. Note that the average particle size of the carbides is more preferably 7 nm or less.

Examples of the fine carbides include Ti carbides, and furthermore, V carbides, Mo carbides, W carbides, Nb carbides, Zr carbides, and Hf carbides. These carbides do not undergo coarsening and the average particle size thereof remains 10 nm or less, as long as the heating temperature of the steel sheet is held at 700 °C or lower. The coarsening of the carbides is thus suppressed even when the steel sheet is heated to a warm-forming temperature range of 400 °C to not exceeding 700 °C for warm forming, with the result that the steel sheet will not show a considerable reduction in its strength after cooled to room temperature following the warm forming process. Thus, by providing a steel sheet with a microstructure that contains the aforementioned carbides having an average particle size of 10 nm or less in a matrix of substantially ferrite single phase, it is possible to effectively suppress the reduction of yield strength of a press-formed part, which is obtained by warm forming of the steel sheet while heating it to the warm-forming temperature range of 400 °C to not exceeding 700 °C.

Note that the aforementioned steel sheet may comprise a coating or plating layer, such as a hot dip galvanized layer. Examples of such a coating or plating layer include an electroplated layer, an electroless-plated layer, a hot-dipped layer, and so on. Further, a galvannealed layer may also be used.

Next, a method for manufacturing a steel sheet that can preferably be used in the warm press forming method according to the present invention will be described.

The steel sheet that can preferably used in the warm press forming method according to the present invention is obtained by heating a steel material, then subjecting the steel material to hot rolling including rough rolling and finish rolling, and subsequently coiling the steel material to obtain a hot rolled steel sheet.

In this case, the method for manufacturing a steel raw material preferably includes, without any particular limitation: preparing a molten steel having the aforementioned composition by a well-known steelmaking method, such as a converter and an electric furnace; subjecting the molten steel to optional secondary refining in a vacuum degassing furnace; and casting the molten steel to obtain a steel raw material, such as slab, by a well-known casting method, such as a continuous casting. Note that the continuous casting is preferred in terms of productivity and quality.

Preferred manufacturing conditions will now be described.

**Heating temperature of steel raw material: 1100 °C to 1350 °C**

Coarse carbides fail to be dissolved if the heating temperature of the steel raw material is below 1100 °C, and consequently fewer fine carbides are dispersed and precipitated in the resulting steel sheet, which makes it difficult to ensure a high strength as desired. On the other hand, if the heating temperature of the steel raw material is above 1350 °C, oxidation progresses so much as to form oxide scales during hot rolling and to deteriorate the surface texture of the steel sheet, thereby lowering the warm formability of the steel sheet. Therefore, the heating temperature of the steel raw material is preferably set in the range of 1100 °C to 1350 °C. A more preferable range is 1150 °C to 1300 °C.

**Finisher delivery temperature: 840 °C or higher**

If the finisher delivery temperature is below 840 °C, the microstructure contains extended ferrite grains and ends up with a mixed-grain-size microstructure in which individual ferrite grains are greatly different in grain size, with the result that the strength of the steel sheet significantly decreases. In addition, a finisher delivery temperature below 840 °C results in excessive strain energy being stored in the steel sheet during the rolling process, which makes it difficult to obtain a microstructure containing ferrite grains having an average grain size of 1 $\mu$m or more. Therefore, the finisher delivery temperature is preferably set to be 840 °C or higher, and more preferably 860 °C or higher.

**Time to initiate forced cooling after completion of hot rolling: within three seconds**

After completion of the aforementioned hot rolling, the resulting hot rolled steel sheet is subjected to forced cooling. If more than three seconds elapse before the forced cooling is initiated after completion of the hot rolling, a large amount of carbides are subject to strain-induced precipitation, which makes it difficult to ensure desired precipitation of fine carbides. Therefore, the forced cooling is preferably initiated within three seconds after completion of the hot rolling, and more preferably within two seconds.

**Average cooling rate from the start to the end of cooling: 30 °C/s or higher**

If the average cooling rate from the start to the end of cooling is lower than 30 °C/s, the steel sheet is maintained at a high temperature for a longer period of time, which accelerates coarsening of carbides caused by strain-induced precipitation. Therefore, the aforementioned forced cooling after the hot rolling is preferably performed at an average cooling rate of 30 °C/s or higher to rapidly cool the steel sheet to a predetermined temperature. The average cooling rate is more preferably 50 °C/s or higher.

Note that a cooling stop temperature is set such that a coiling temperature eventually falls within a target temperature range, taking into account the temperature drop that would occur in the steel sheet during a period from the end of cooling to the start of coiling. That is, since the steel sheet experiences a drop in temperature as it is air cooled after the end of cooling, the cooling stop temperature is normally set to be approximately equal to the temperature in the range of coiling temperature + 5 °C to + 10 °C.

**Coiling temperature: 500 °C to 700 °C**

A coiling temperature below 500 °C results in an insufficient amount of carbides being precipitated in the steel sheet for providing the steel sheet with as high strength as desired. On the other hand, a coiling temperature above 700 °C induces coarsening of precipitated carbides, which also makes it difficult to provide the steel sheet with as high strength as desired. Therefore, the coiling temperature is preferably set in the range of 500 °C to 700 °C, and more preferably in the range of 550 °C to 680 °C.

In addition, the resulting hot rolled steel sheet may be subjected to a coating or plating process using a well-known method to form a coating or plating layer on its surface. The coating or plating layer is preferably a hot-dip galvanized layer, a galvannealed layer, an electroplated layer, or the like.

Next, the mechanical properties of the steel sheet that may be obtained by the aforementioned manufacturing method and preferably be used in the warm press forming method according to the present invention will be described. Specifically, the preferred steel sheet has the following mechanical properties:

(a) tensile strength at room temperature: 780 MPa or more, and yield ratio at room temperature: 0.85 or more;
(b) yield strength $YS_2$ in a warm-forming temperature range of 400 °C to 700 °C: 80 % or less of yield strength $YS_1$

at room temperature; and

(c) total elongation $El_2$ in a warm-forming temperature range of 400 °C to 700 °C: 1.1 times or more total elongation $El_1$ at room temperature.

These properties will be further described below.

**Tensile strength at room temperature: 780 MPa or more, and yield ratio at room temperature: 0.85 or more**

While the warm press forming method according to the present invention is applied to a steel sheet having a tensile strength at room temperature of 440 MPa or more, the aforementioned manufacturing method may be used to obtain a steel sheet having $TS_1$ of 780 MPa or more and a yield ratio at room temperature of 0.85 or more. As used herein, "$TS_1$" represents a tensile strength at room temperature and "room temperature" refers to a temperature of (22 $\pm$ 5) °C.

**Yield strength $YS_2$ in a warm-forming temperature range of 400 °C to 700 °C: 80 % or less of yield strength $YS_1$ at room temperature**

For a steel sheet having a yield strength $YS_2$ in a warm-forming temperature range of 400 °C to 700 °C which is more than 80 % of a yield strength $YS_1$ at room temperature, the deformation resistance of the steel sheet is not sufficiently reduced at the time of warm forming and accordingly increased load (press load) is required for warm forming, leading to a shortened die life. Additionally, the body size of the processing machine (press machine) must be necessarily increased for applying a large load (press load). As the body size of the processing machine (press machine) increases, it takes a longer time to transfer a steel sheet heated to a warm forming temperature to a processing machine, which causes a temperature drop in the blank and accordingly makes it difficult to perform warm forming in a desired temperature range. Moreover, shape fixability is not improved sufficiently, and consequently the effect to be obtained by warm forming is reduced.

Therefore, the yield strength $YS_2$ in the warm-forming temperature range of 400 °C to 700 °C is preferably set to be 80 % or less, and more preferably 70 % or less of the yield strength $YS_1$ at room temperature.

**Total elongation $El_2$ in a warm-forming temperature range of 400 °C to 700 °C: 1.1 times or more total elongation $El_1$ at room temperature**

For a steel sheet having a total elongation $El_2$ in a warm-forming temperature range of 400 °C to 700 °C which is 1.1 times or more the total elongation $El_1$ at room temperature, formability for warm forming is improved sufficiently to allow the steel sheet to be formed more easily into a member having a complicated shape, without causing any defects such as cracking.

Therefore, the total elongation $El_2$ in the warm-forming temperature range of 400 °C to 700 °C is preferably set to be 1.1 times or more, and more preferably 1.2 times or more the total elongation $El_1$ at room temperature.

Further, a steel sheet, which exhibits the following mechanical properties in addition to the above after being formed into a press-formed part, may more preferably be used in the warm press forming method according to the present invention.

**Yield strength $YS_3$ at room temperature and total elongation $El_3$ at room temperature of a press-formed part: 80 % or more of the yield strength $YS_1$ at room temperature and the total elongation $El_1$ at room temperature of the material steel sheet prior to press forming**

For a press-formed part having a yield strength $YS_3$ at room temperature and a total elongation $El_3$ at room temperature that are less than 80 % of the yield strength $YS_1$ at room temperature and the total elongation $El_1$ at room temperature of the material steel sheet prior to press forming, respectively, the strength and total elongation of the resulting member after warm forming are insufficient. If such a steel sheet is subjected to warm press forming to produce an automobile component of desired shape, the resulting component offers insufficient crash worthiness upon crash of the automobile, resulting in reduced reliability as an automobile component.

In view of this, it is preferred that a press-formed part has a yield strength $YS_3$ at room temperature and a total elongation $El_3$ at room temperature that are 80 % or more, and more preferably 90 % or more of the yield strength $YS_1$ at room temperature and the total elongation $El_1$ at room temperature of the material steel sheet prior to press forming.

EXAMPLES

(Example 1)

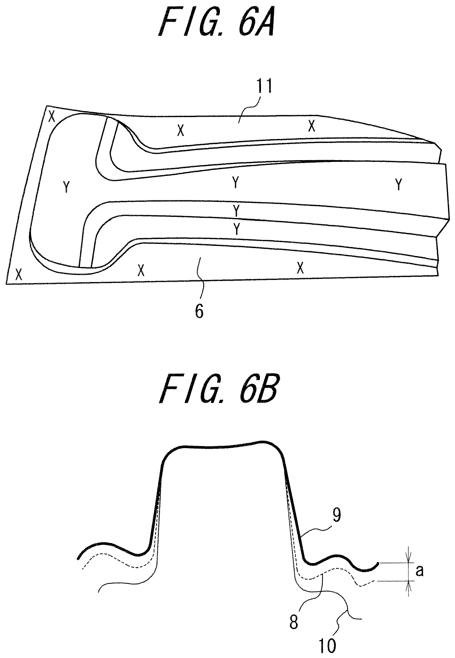

Steel sheets, each having a sheet thickness of 1.6 mm and a tensile strength of 440 MPa grade to 1180 MPa grade, were heated under the conditions shown in Table 1 and subjected to warm crash forming to obtain center pillar upper press panels as shown in FIG. 6(a), respectively, which are one of automobile frame components. For comparison, other steel sheets were also subjected to warm draw forming and cold crash forming at room temperature (without heating steel sheets) under the conditions shown in Table 1 to obtain center pillar upper press panels.

In this case, the steel sheets were heated in an electric furnace. The in-furnace time was set to be 300 seconds so that each blank can be heated in the furnace, resulting in a uniform temperature distribution throughout the blank. The heated blanks were then removed from the furnace and fed into a press machine after a transfer time of 10 seconds, respectively, where the blanks were subjected to forming processes under the conditions shown in Table 1. Immediately thereafter, the temperature difference among flange portions and other portions of each of the formed panels was measured. That is, the temperature was measured in each panel at six points (indicated by "X" in FIG. 6(a)) in flange portions and five points in other portions (indicated by "Y" in FIG. 6(a)) using a contactless thermometer, and the difference among the average temperature of the X points and the average temperature of the Y points was defined as the difference in average temperature among the flange portions and the other portions.

In addition, a servo press was used as a press machine, where the pressing speed was set to be 15 spm (strokes per minute, which represents the number of parts that can be formed in one minute plus any additional time, if applicable, taken to hold the parts at the press bottom dead point).

The formed panels were air cooled for a sufficiently long period of time, after which, regarding the cross sectional shape of each center pillar upper press panel as shown in FIG. 6(b), measurements were made with a laser displacement sensor of the amount of geometric changes $a$ made to the edges of each panel until the end of air cooling, in relation to the reference panel shape (which is the shape the panel took when it was removed from the die immediately after press forming). The measurement results are also shown in Table 1.

[Table 1]

Table 1

| No. | Forming Method | Nominal Tensile Strength of Steel Sheet (MPa) | Heating Temperature of Steel Sheet (°C) | Holding Time at Press Bottom Dead Point (sec) | Difference in Average Temperature among Flange Portions and Other Portions of Press-formed Part (°C) | Amount of Geometric Changes $a$ (mm) | Remarks |
|---|---|---|---|---|---|---|---|
| 1 | Warm Crash Forming | 440 | 640 | - | 35 | 0.25 | Inventive Example |
| 2 | Warm Crash Forming | 590 | 640 | - | 34 | 0.31 | Inventive Example |
| 3 | Warm Crash Forming | 780 | 640 | - | 38 | 0.35 | Inventive Example |
| 4 | Warm Crash Forming | 980 | 640 | - | 32 | 0.35 | Inventive Example |
| 5 | Warm Crash Forming | 1180 | 400 | - | 15 | 0.13 | Inventive Example |

(continued)

| No. | Forming Method | Nominal Tensile Strength of Steel Sheet (MPa) | Heating Temperature of Steel Sheet (°C) | Holding Time at Press Bottom Dead Point (sec) | Difference in Average Temperature among Flange Portions and Other Portions of Press-formed Part (°C) | Amount of Geometric Changes *a* (mm) | Remarks |
|---|---|---|---|---|---|---|---|
| 6 | Warm Crash Forming | 980 | 530 | - | 22 | 0.18 | Inventive Example |
| 7 | Warm Crash Forming | 980 | 590 | - | 28 | 0.21 | Inventive Example |
| 8 | Warm Crash Forming | 980 | 700 | - | 40 | 0.90 (press load increased) | Inventive Example |
| 9 | Warm Crash Forming | 980 | 710 | - | 45 | cracks observed | Comparative Example |
| 10 | Warm Crash Forming | 980 | 350 | - | 18 | many wrinkles observed | Comparative Example |
| 11 | Warm Draw Forming | 780 | 700 | - | 258 | 2.5 | Comparative Example |
| 12 | Warm Draw Forming | 980 | 700 | - | 263 | 2.6 | Comparative Example |
| 13 | Warm Draw Formine | 1180 | 700 | - | 260 | 2.5 | Comparative Example |
| 14 | Warm Draw Forming | 980 | 400 | - | 168 | 1.2 | Comparative Example |
| 15 | Warm Draw Forming | 980 | 500 | - | 183 | 11 | Comparative Example |
| 16 | Wann Draw Forming | 980 | 600 | - | 203 | 1.4 | Comparative Example |
| 17 | Cold Crash Forming | 980 | - | - | - | cracks observed (forming failed) | Comparative Example |
| 18 | Cold Crash Forming | 1180 | - | - | - | cracks observed (forming failed ) | Comparative Example |

(continued)

| No. | Forming Method | Nominal Tensile Strength of Steel Sheet (MPa) | Heating Temperature of Steel Sheet (°C) | Holding Time at Press Bottom Dead Point (sec) | Difference in Average Temperature among Flange Portions and Other Portions of Press-formed Part (°C) | Amount of Geometric Changes a (mm) | Remarks |
|---|---|---|---|---|---|---|---|
| 19 | Warm Crash Forming | 980 | 640 | 5 | 10 | 0.28 | Inventive Example |
| 20 | Warm Crash Forming | 980 | 640 | 1 | 18 | 0.32 | Inventive Example |

As Table 1 shows, each of steel Nos. 1 to 4 of inventive examples, in which steel sheets were subjected to warm crash forming with the heating temperature of the steel sheets being set to be 640 °C, yielded good dimensional accuracy such that the difference in average temperature among flange portions and other portions of each steel sheet was kept within 100 °C and the amount of geometric changes a was 0.5 mm or less.

For steel Nos. 5 to 7 of inventive examples, in which steel sheets of 980 MPa grade and 1180 MPa grade were subjected to warm crash forming with the heating temperature of the steel sheets being set to be in the range of 400 °C to 590 °C, the lower heating temperature led to a further reduction in the difference in average temperature among flange portions and other portions, as well as a further reduction in the amount of geometric changes a.

In addition, for steel Nos. 19 and 20 of inventive examples, in which steel sheets were held at the press bottom dead point for 5 seconds and 1 second, respectively, further reductions in the difference in average temperature among flange portions and other portions and in the amount of geometric changes a were made, as compared with steel No. 4 of an inventive example using a steel sheet of the same 980 MPa grade and the same heating temperature.

On the other hand, for steel No. 8 of an inventive example, in which a steel sheet was subjected to warm crash forming with the heating temperature of the steel sheet being set to be 700 °C, the amount of geometric changes a was 1.0 mm or less, yet the frictional force among the steel sheet and the press die increased so much, as compared with steel Nos. 1 to 7 of inventive examples, that the press load had to be increased.

In contrast, for steel No. 9 of a comparative example, in which a steel sheet was subjected to warm crash forming with the heating temperature of the steel sheet being set to be higher than 700 °C, cracks were observed during the forming process. In addition, for steel No. 10 of a comparative example, in which a steel sheet was subjected to warm crash forming with the heating temperature of the steel sheet being set to be lower than 400 °C, many wrinkles were observed.

In addition, steel Nos. 11 to 16 of comparative examples, in which steel sheets were subjected to warm draw forming with the heating temperature of the steel sheets being set to be in the range of 400 °C to 700 °C, yielded a significantly lower dimensional accuracy such that the difference in average temperature among flange portions and other portions was 150 °C or higher and the amount of geometric changes a was greater than 1.0 mm.

Further, for steel Nos. 17 and 18 of comparative examples, in which steel sheets of 980 MPa grade and 1180 MPa grade were subjected to cold crash forming at room temperature, large cracks were observed during the forming process and consequently the press forming failed.

It is clearly understood from the above results that according to the warm press forming method of the present invention, the difference in average temperature among flange portions and other portions of a press formed part immediately after the formation may be adjusted to be smaller than 100 °C, and consequently a press-formed part may be obtained with excellent dimensional accuracy such that the amount of geometric changes made to the panel from the time immediately after press forming until the end of air cooling is 1 mm or less, and preferably 0.5 mm or less.

(Example 2)

Molten steels having the chemical compositions shown in Table 2 were prepared by steelmaking in a converter, and subjected to continuous casting to obtain slabs (steel raw materials). The slabs (steel raw materials) were heated to the heating temperatures shown in Table 3, then subjected to soaking, rough rolling, finish rolling under the hot rolling conditions shown in Table 3, cooling, and subsequent coiling to obtain hot rolled steel sheets (sheet thickness: 1.6 mm).

Note that each of the steel sheets a, i, k, m was heated to 700 °C in a continuous galvanizing line and immersed in a hot-dip galvanizing bath at a liquid temperature of 460 °C to form a hot-dip galvanized layer on the surfaces of the steel sheet, and the hot-dip galvanized layer thus obtained was subjected to alloying treatment at 530 °C to form a galvannealed layer. The coating weight was set to be 45 g/m$^2$ for each steel sheet.

Then, test pieces were collected from the hot rolled steel sheets thus obtained and analyzed by microstructure observation, precipitation observation, and tensile tests. The analysis was carried out as follows.

**(1) Microstructure observation**

Test pieces were collected from the obtained hot rolled steel sheets for microstructure observation. Each test piece was polished and etched (etching solution: 5 % nital solution) at its cross section parallel to the rolling direction (L-section), and then its center part in the sheet thickness direction was observed and imaged in ten fields of view under a scanning electron microscope (at magnification of ×400). The micrographs thus obtained were analyzed using an image processing technique to identify the microstructure and to measure the microstructure proportion and the average grain size of each phase.

That is, the obtained micrographs were used to distinguish ferrite phase from other phases so as to measure the area of the ferrite phase, thereby determining an area ratio of the ferrite phase to the entire fields of view being observed. While the ferrite phase is observed with smoothly curved grain boundaries with no corrosion marks appeared in the grains, any grain boundaries appeared in linear form were construed as part of the ferrite phase. The obtained micrographs were also used to determine the average grain size of ferrite by a cutting method in conformity with ASTM E 112-10.

**(2) Precipitate observation**

In addition, test pieces were collected from the center portions in the sheet thickness direction of the obtained hot rolled steel sheets, and subjected to mechanical and chemical polish to obtain thin films for observation under a transmission electron microscope (TEM). The thin films thus obtained were observed under a transmission electron microscope (TEM) (at magnification of × 120,000) for precipitates (carbides). Measurements were made of the particle size of 100 or more carbides to determine an arithmetic mean value thereof, which was defined as the average particle size of carbides in each steel sheet. Note that coarse cementite and nitride particles greater than 1 $\mu$m in diameter were excluded from the measurements.

**(3) Tensile test**

JIS No. 13B tensile test pieces were collected from the obtained hot rolled steel sheets with a direction orthogonal to the rolling direction being the tensile direction, in accordance with JIS Z 2201 (1998). The collected test pieces were subjected to tensile tests in accordance with JIS G 0567 (1998) to measure mechanical properties (yield strength YS$_1$, tensile strength TS$_1$, total elongation El$_1$) at room temperature (22 ± 5 °C) and high-temperature mechanical properties (yield strength YS$_2$, tensile strength TS$_2$, total elongation El$_2$) at temperatures shown in Table 4. Note that all of the tensile tests were conducted with a cross-head speed of 10 mm/min. In addition, in the case of measuring high-temperature mechanical properties, tensile tests were carried out in such a way that test pieces were heated in an electric furnace and retained for 15 minutes after they had reached a condition where they were stably maintained at temperatures within a range of ±3 °C of the test temperature.

Table 3 and Table 4 list the test results (1) to (3).

[Table 2]

Table 2

| Steel ID | Chemical Composition (mass%) | | | | | | | | | | | | | ([%C] / 12) / ([%Ti] / 48)* |
| --- | --- | --- | --- | --- | --- | --- | --- | --- | --- | --- | --- | --- | --- | --- |
| | C | Si | Mn | P | S | Al | N | Ti | B | V, Mo, W, Nb, Zr, Hf | Mg, Ca, Y, REM | Sb, Cu, Sn, Ni, Cr | Others | |
| A | 0048 | 0.01 | 0.95 | 0.01 | 0.0018 | 0.041 | 0.0038 | 0.158 | - | - | - | - | - | 1.22 |
| B | 0.075 | 0.02 | 1.05 | 0.02 | 0.0025 | 0.040 | 0.0029 | 0.165 | - | - | - | - | - | 1.82 |
| C | 0063 | 0.01 | 1.01 | 002 | 0.0022 | 0.041 | 0.0039 | 0.221 | 0.0014 | - | - | - | - | 1.14 |
| D | 0082 | 0.02 | 0.75 | 0.01 | 0.0009 | 0.039 | 0.0026 | 0.165 | - | V: 0.12 | - | - | - | 1.18 |
| E | 0.062 | 0.02 | 0.65 | 0.01 | 0.0031 | 0.035 | 0.0048 | 0.151 | - | W: 1.13, Mo: 0.09 | - | - | - | 1.08 |
| F | 0.132 | 0.01 | 0.85 | 0.02 | 00013 | 0.045 | 0.0039 | 0.141 | - | V: 0.36 | Mg: 0.002 | - | O: 0.0008, As: 0.0007, Ag: 0.0001, Tc: 0.0007, Be: 0.0004, Ta: 0.0001, Sr: 0.0001, Pt: 0.0001, Rh: 0.0001, Ru: 0.0001 | 1.10 |
| G | 0.121 | 0.03 | 0.53 | 0.02 | 0.0038 | 0.041 | 0.0028 | 0.151 | - | Mo: 0.27, Nb: 0.02, Zr: 0.02, Hf: 0.03 | | Sb: 0.06 | Te: 0.0001, Bi: 0.0002, Ge: 0.0003, Zn: 0.001, Re: 0.0001 | 1.54 |
| H | 0.091 | 0.02 | 0.58 | 0.01 | 0.0029 | 0.039 | 0.0033 | 0.190 | - | - | Mg: 0.002, Ca: 0.002 | Sn 0.05, Ni: 03 | Cd: 0.0001, Au: 0.0001, Co: 0.002, Ir: 0.0001, Os : 0.0001 | 1.92 |
| I | 0.085 | 0.02 | 0.53 | 0.01 | 0.0029 | 0.039 | 0.0029 | 0.166 | - | V: 0.10 | REM: 0.001, Y: 0.001 | Cu: 0.2, Cr: 0.1 | Se: 0.0001, Po: 0.0001, Pb: 0.0001, Ga: 0.0002, In: 0.0001, Ti: 0.0002, | 1.31 |
| J | 0.029 | 0.02 | 0.65 | 0.02 | 0.0023 | 0.044 | 0.0034 | 0.169 | - | - | - | - | - | 0.69 |
| K | 0.191 | 0.01 | 0.75 | 0.02 | 0.0019 | 0.046 | 0.0036 | 0.166 | - | - | - | - | - | 4.60 |
| L | 0.115 | 0.03 | 0.85 | 0.01 | 0.0015 | 0.041 | 0.0023 | 0.153 | - | - | - | - | - | 3.01 |

EP 2 823 904 B1

17

(continued)

| Steel ID | Chemical Composition (mass%) | | | | | | | | | | | | | ([%C] / 12) / ([%Ti] / 48)* |
|---|---|---|---|---|---|---|---|---|---|---|---|---|---|---|
| | C | Si | Mn | P | S | Al | N | Ti | B | V, Mo, W, Nb, Zr, Hf | Mg, Ca, Y, REM | Sb, Cu, Sn, Ni, Cr | Others | |
| M | 0.085 | 0.03 | 0.25 | 0.02 | 0.0025 | 0.043 | 0.0035 | 0.165 | 00015 | V: 0.15 | - | - | - | 1.11 |
| N | 0.091 | 0.02 | 065 | 0.01 | 0.0031 | 0.045 | 0.0041 | 0.153 | - | Mo: 0.31 | - | Cr: 0.04, Ni: 0.03 | - | 1.18 |
| O | 0.050 | 0.02 | 0.65 | 0.01 | 0.0031 | 0.047 | 0.0045 | 0.090 | - | - | - | - | - | 2.22 |

*[%M] is the content of element M (mass%) However, if V, W, Mo, Nb, Zr, Hf are contained, the following expression needs to be satisfied instead of ([%C] / 12) / ([%Ti] / 48):

([%C] / 12)/ ([%Ti] / 48 + [%V] / 51 + [%W] / 184 + [%Mo] / 96 + [%Nb] / 93 + [%Zr] / 91 + [%Hf] / 179).

[Table 3]

[Table 3]

Table 3

| Steel Sheet | Steel ID | Hot Rolling Conditions, etc. | | | | | Steel Sheet Microstructure | | | |
|---|---|---|---|---|---|---|---|---|---|---|
| | | Heating Temperature (°C) | Finisher Delivery Temperature (°C) | Time to Initiate Forced Cooling after Completion of Rolling (sec) | Average Cooling Rate (°C/s) | Coiling Temperature (°C) | Type* | Area Ratio of Ferrite Phase (%) | Average Grain Size of Ferrite ($\mu$m) | Average Particle Size of Precipitates (nm) |
| a | A | 1220 | 900 | 1.1 | 75 | 600 | F + $\theta$ | 99 | 5 | 3 |
| b | A | 1050 | 890 | 1.3 | 80 | 620 | F | 100 | 5 | 18 |
| c | A | 1230 | 800 | 1.2 | 80 | 600 | F + Deformed F | 92 | 9 | 6 |
| d | A | 1230 | 870 | 4.6 | 75 | 650 | F | 100 | 7 | 11 |
| e | A | 1220 | 880 | 1.2 | 20 | 600 | F | 100 | 7 | 14 |
| f | A | 1230 | 890 | 1.8 | 85 | 730 | F | 100 | 6 | 14 |
| g | A | 1220 | 890 | 1.2 | 80 | 480 | F + B | 85 | 4 | 3 |
| h | B | 1250 | 950 | 1.6 | 75 | 680 | F | 100 | 4 | 4 |
| i | C | 1260 | 910 | 1.5 | 55 | 640 | F | 100 | 4 | 2 |
| i | D | 1250 | 970 | 1.8 | 60 | 620 | F | 100 | 5 | 5 |
| k | E | 1250 | 920 | 1.3 | 90 | 590 | F | 100 | 3 | 3 |
| l | F | 1320 | 960 | 1.5 | 85 | 620 | F | 100 | 4 | 5 |
| m | G | 1330 | 960 | 1.4 | 95 | 630 | F | 100 | 4 | 3 |
| n | H | 1330 | 900 | 1.3 | 65 | 620 | F + $\theta$ | 98 | 4 | 4 |
| o | I | 1250 | 980 | 1.7 | 70 | 640 | F + $\theta$ | 99 | 4 | 4 |
| p | J | 1250 | 920 | 1.6 | 75 | 650 | F | 100 | 7 | 11 |
| q | K | 1250 | 930 | 1.4 | 70 | 650 | F + P | 92 | 4 | 3 |
| r | L | 1260 | 920 | 1.3 | 80 | 640 | F + P | 93 | 4 | 4 |
| s | M | 1250 | 910 | 1.1 | 65 | 610 | F | 100 | 4 | 3 |
| t | N | 1250 | 920 | 1.2 | 70 | 640 | F | 100 | 3 | 3 |

(continued)

| Steel Sheet | Steel ID | Hot Rolling Conditions, etc. | | | | | Steel Sheet Microstructure | | | |
|---|---|---|---|---|---|---|---|---|---|---|
| | | Heating Temperature (°C) | Finisher Delivery Temperature (°C) | Time to Initiate Forced Cooling after Completion of Rolling (sec) | Average Cooling Rate (°C/s) | Coiling Temperature (°C) | Type* | Area Ratio of Ferrite Phase (%) | Average Grain Size of Ferrite (μm) | Average Particle Size of Precipitates (nm) |
| u | O | 1230 | 910 | 1.1 | 65 | 610 | F + θ | 94 | 4 | 3 |

*F: ferrite phase, Deformed F: deformed ferrite phase, θ: cementite. P: pearlite, B: bainite phase

[Table 4]

[Table 4]

Table 4

| Steel Sheet | Steel ID | Mechanical Properties of Steel Sheet at Room Temperature | | | | Mechanical Properties of Steel Sheet at High Temperature | | | | $YS_2/YS_1 \times 100$ (%) | $El_2/El_1$ |
|---|---|---|---|---|---|---|---|---|---|---|---|
| | | YieldStrength $YS_1$ (MPa) | Tensile Strength $TS_1$ (MPa) | Total Elongation $El_1$ (%) | Yield Ratio YR | Temperature (°C) | YieldStrength $YS_2$ (MPa) | Tensile Strength $TS_2$ (MPa) | Total Elongation $El_2$ (%) | | |
| a | A | 738 | 820 | 20 | 0.9 | 400 | 539 | 607 | 23 | 73 | 1.16 |
| | | | | | | 500 | 413 | 476 | 29 | 56 | 1.46 |
| | | | | | | 600 | 273 | 328 | 36 | 37 | 1.78 |
| | | | | | | 700 | 148 | 189 | 53 | 20 | 2.65 |
| | | | | | | 800 | 125 | 164 | 58 | 17 | 2.92 |
| b | A | 567 | 689 | 22 | 0.82 | 600 | 221 | 290 | 38 | 39 | 1.73 |
| c | A | 677 | 768 | 14 | 0.88 | 600 | 365 | 439 | 21 | 54 | 1.50 |
| d | A | 634 | 767 | 24 | 0.83 | 600 | 234 | 306 | 41 | 37 | 1.71 |
| e | A | 622 | 745 | 24 | 0.83 | 600 | 228 | 399 | 39 | 37 | 1.63 |
| f | A | 590 | 726 | 23 | 0.81 | 600 | 215 | 288 | 38 | 36 | 1.65 |
| g | A | 621 | 757 | 17 | 0.82 | 600 | 373 | 445 | 18 | 57 | 1.06 |
| h | B | 771 | 845 | 20 | 0.91 | 600 | 278 | 329 | 36 | 36 | 1.80 |
| i | C | 860 | 945 | 19 | 0.91 | 600 | 298 | 354 | 35 | 35 | 1.84 |
| j | D | 912 | 997 | 18 | 0.91 | 600 | 340 | 401 | 31 | 37 | 1.72 |
| k | E | 852 | 932 | 21 | 0.91 | 600 | 321 | 377 | 37 | 38 | 1.76 |
| l | F | 1141 | 1201 | 15 | 0.95 | 600 | 374 | 452 | 28 | 33 | 1.87 |
| m | G | 1123 | 1195 | 18 | 0.94 | 600 | 330 | 395 | 32 | 29 | 1.78 |
| n | H | 884 | 951 | 20 | 0.93 | 600 | 296 | 350 | 35 | 33 | 1.75 |
| o | I | 893 | 971 | 21 | 0.91 | 600 | 310 | 372 | 39 | 35 | 1.86 |
| p | J | 607 | 731 | 23 | 0.83 | 600 | 193 | 310 | 43 | 28 | 1.87 |
| q | K | 745 | 834 | 19 | 0.89 | 400 | 574 | 649 | 18 | 77 | 0.95 |
| r | L | 736 | 822 | 19 | 0.9 | 400 | 563 | 635 | 18 | 76 | 0.95 |

EP 2 823 904 B1

(continued)

| Steel Sheet | Steel ID | Mechanical Properties of Steel Sheet at Room Temperature | | | | Mechanical Properties of Steel Sheet at High Temperature | | | | $YS_2 / YS_1 \times 100$ (%) | $El_2 / El_1$ |
|---|---|---|---|---|---|---|---|---|---|---|---|
| | | Yield Strength $YS_1$ (MPa) | Tensile Strength $TS_1$ (MPa) | Total Elongation $El_1$ (%) | Yield Ratio YR | Temperature (°C) | Yield Strength $YS_2$ (MPa) | Tensile Strength $TS_2$ (MPa) | Total Elongation $El_2$ (%) | | |
| s | M | 954 | 1015 | 18 | 0.94 | 600 | 345 | 406 | 31 | 36 | 1.72 |
| t | N | 945 | 1027 | 18 | 0.92 | 600 | 312 | 363 | 35 | 33 | 1.94 |
| u | O | 671 | 721 | 23 | 0.93 | 600 | 251 | 305 | 25 | 37 | 1.09 |

Then, the steel sheets thus obtained were heated under the conditions shown in Table 5, and then subjected to warm crash forming to obtain center pillar upper press panels as shown in FIG. 6(a), respectively, which are one of automobile frame components. Note that the conditions for heating and crash forming other than those shown in Table 5 are the same as described in Example 1.

Additionally, under the same conditions as those in Example 1, measurements were made of the temperature difference among flange portions and other portions of each panel immediately after the formation, and of the amount of geometric changes *a* made to the edges of each panel until the end of the air cooling process, in relation to the reference panel shape (which is the shape the panel takes when it is removed from the die immediately after press forming).

Moreover, JIS No. 13B tensile test pieces were collected from the formed panels and subjected to tensile tests at room temperature under the same conditions as described above, to measure their mechanical properties (yield stress ($YS_3$), tensile strength ($TS_3$), and total elongation ($El_3$)).

The obtained results are shown in Table 5.

[Table 5]

Table 5

| No. | Steel Sheet | Steel ID | Heating Temperature of Steel Sheet (°C) | Holding Time at Press Bottom Dead Point (sec) | Difference in Average Temperature among Flange Portions and Other Portions of Press-formed Part (°C) | Amount of Geometric Changes $a$ (mm) | Mechanical Properties of Press-formed Part (Panel) | | | | | | Remarks |
|---|---|---|---|---|---|---|---|---|---|---|---|---|---|
| | | | | | | | Yield Strength $YS_3$ (MPa) | Tensile Strength $TS_3$ (MPa) | Total Elongation $El_3$ (%) | $YS_3/YS_1 \times 100$ (%) | $TS_3/TS_1 \times 100$ (%) | $El_3/El_1 \times 100$ (%) | |
| 21 | a | A | 400 | - | 15 | 0.10 | 741 | 823 | 21 | 100 | 100 | 105 | Inventive Example |
| 22 | | | 500 | - | 20 | 0.15 | 735 | 818 | 22 | 100 | 100 | 110 | Inventive Example |
| 23 | | | 600 | - | 29 | 0.33 | 740 | 822 | 22 | 100 | 100 | 110 | Inventive Example |
| 24 | | | 700 | - | 40 | 0.32 | 730 | 812 | 24 | 99 | 99 | 120 | Inventive Example |
| 25 | | | 500 | 1 | 15 | 0.12 | 738 | 819 | 22 | 100 | 100 | 110 | Inventive Example |
| 26 | | | 500 | 5 | 10 | 0.10 | 761 | 852 | 15 | 103 | 104 | 75 | Inventive Example |
| 27 | b | A | 600 | - | 29 | 0.31 | 566 | 690 | 22 | 100 | 100 | 100 | Inventive Example |
| 28 | c | A | 600 | - | 29 | 0.33 | 694 | 777 | 16 | 103 | 101 | 114 | Inventive Example |
| 29 | d | A | 600 | - | 28 | 0.33 | 641 | 771 | 24 | 101 | 101 | 100 | Inventive Example |
| 30 | e | A | 600 | - | 30 | 0.32 | 619 | 740 | 24 | 100 | 99 | 100 | Inventive Example |
| 31 | f | A | 600 | - | 29 | 0.32 | 582 | 723 | 24 | 99 | 100 | 104 | Inventive Example |
| 32 | g | A | 600 | - | 29 | 0.33 | 671 | 812 | 12 | 108 | 107 | 71 | Inventive Example |

EP 2 823 904 B1

| No. | Steel Sheet | Steel ID | Heating Temperature of Steel Sheet (°C) | Holding Time at Press Bottom Dead Point (sec) | Difference in Average Temperature among Flange Portions and Other Portions of Press-formed Part (°C) | Amount of Geometric Changes *a* (mm) | Mechanical Properties of Press-formed Part (Panel) | | | | | | Remarks |
|---|---|---|---|---|---|---|---|---|---|---|---|---|---|
| | | | | | | | Yield Strength YS$_3$ (MPa) | Tensile Strength TS$_3$ (MPa) | Total Elongation El$_3$ (%) | YS$_3$/YS$_1$ × 100 (%) | TS$_3$/TS$_1$ × 100 (%) | El$_3$/El$_1$ × 100 (%) | |
| 33 | h | B | 600 | - | 28 | 0.33 | 768 | 842 | 23 | 100 | 100 | 115 | Inventive Example |
| 34 | i | C | 600 | - | 28 | 0.34 | 863 | 946 | 21 | 1 00 | 100 | 111 | Inventive Example |
| 35 | j | D | 600 | - | 30 | 0.35 | 916 | 1002 | 19 | 100 | 101 | 106 | Inventive Example |
| 36 | k | E | 600 | - | 27 | 0.33 | 855 | 936 | 22 | 100 | 100 | 105 | Inventive Example |
| 37 | l | F | 600 | - | 29 | 0.40 | 1139 | 1185 | 16 | 100 | 99 | 107 | Inventive Example |
| 38 | m | G | 600 | - | 29 | 0.41 | 1125 | 1194 | 21 | 100 | 100 | 117 | Inventive Example |
| 39 | n | H | 600 | - | 28 | 0.34 | 875 | 948 | 19 | 99 | 100 | 95 | Inventive Example |
| 40 | o | I | 600 | - | 28 | 0.34 | 905 | 986 | 19 | 101 | 102 | 90 | Inventive Example |
| 41 | p | J | 600 | - | 28 | 0.21 | 405 | 476 | 28 | 67 | 65 | 122 | Inventive Example |
| 42 | q | K | 400 | - | 15 | 0.10 | 739 | 830 | 14 | 99 | 100 | 74 | Inventive Example |
| 43 | r | L | 400 | - | 14 | 0.11 | 737 | 819 | 14 | 100 | 100 | 74 | Inventive Example |
| 44 | s | M | 600 | - | 28 | 0.35 | 948 | 1007 | 19 | 99 | 99 | 106 | Inventive Example |

EP 2 823 904 B1

(continued)

| No. | Steel Sheet | Steel ID | Heating Temperature of Steel Sheet (°C) | Holding Time at Press Bottom Dead Point (sec) | Difference in Average Temperature among Flange Portions and Other Portions of Press-formed Part (°C) | Amount of Geometric Changes $a$ (mm) | Mechanical Properties of Press-formed Part (Panel) | | | | | | Remarks |
|---|---|---|---|---|---|---|---|---|---|---|---|---|---|
| | | | | | | | Yield Strength $YS_3$ (MPa) | Tensile Strength $TS_3$ (MPa) | Total Elongation $El_3$ (%) | $YS_3/YS_1 \times 100$ (%) | $TS_3/TS_1 \times 100$ (%) | $El_3/El_1 \times 100$ (%) | |
| 45 | t | N | 600 | - | 28 | 0.35 | 940 | 1021 | 19 | 99 | 99 | 106 | Inventive Example |
| 46 | u | O | 600 | - | 29 | 0.32 | 681 | 732 | 18 | 101 | 102 | 78 | Inventive Example |

As Table 5 shows, each of steel Nos. 21 to 46 of inventive examples yielded good dimensional accuracy such that the difference in average temperature among flange portions and other portions was kept within 100 °C and the amount of geometric changes *a* was 0.5 mm or less.

In particular, steel Nos. 21 to 26, 33 to 40, 44, and 45 of inventive examples using steel sheets having preferred chemical compositions and microstructures yielded good dimensional accuracy in the press-formed parts after the formation, despite the use of high strength steel sheets having a tensile strength of 780 MPa or more, and furthermore, the press-formed parts exhibited extremely good mechanical properties such that, for example, the tensile strength $TS_3$ of these press-formed parts was 99 % to 104 % of the tensile strength $TS_1$ of the respective material steel sheets before press forming.

REFERENCE SIGNS LIST

1    Die
2    Punch
3    Blank holder
4    Heated steel sheet (blank)
5    Press-formed part (panel)
6    Flange portion
7    Sidewall portion
8    Reference panel (panel removed from the die immediately after press forming)
9    Air-cooled panel
10    Panel at press bottom dead point
11    Center pillar upper press panel

**Claims**

1.   A warm press forming method for forming a steel sheet having a tensile strength of 440 MPa or more into a press-formed part including flange portions and other portions by press forming, the method comprising:

heating the steel sheet to a temperature range of 400°C to not exceeding 700°C; and
then press-forming the heated steel sheet by using crash forming to obtain a press-formed part, in such a way that a difference in average temperature among flange portions and other portions of the press-formed part immediately after the formation is kept within 100°C.

2.   The warm press forming method according to claim 1, wherein the press-formed part has a tensile strength of 80 % to 110 % of a tensile strength of the steel sheet before press forming.

3.   The warm press forming method according to claim 1 or 2, wherein the steel sheet has a chemical composition containing, by mass%,
C: 0.015 % to 0.16%,
Si: 0.2 % or less,
Mn: 1.8 % or less,
P: 0.035 % or less,
S: 0.01 % or less,
Al: 0.1 % or less,
N: 0.01 % or less, and
Ti: 0.13 % to 0.25 %,

provided that a relation defined by Expression (1) below is satisfied, and optionally, by mass%, at least one selected from

V: 1.0 % or less,
Mo: 0.5 % or less,
W: 1.0 % or less,
Nb: 0.1 % or less,

Zr: 0.1 % or less, and
Hf: 0.1 % or less,

provided that a relation defined by Expression (1)' is satisfied,

B: 0.003 % or less,
at least one selected from Mg: 0.2 % or less, Ca: 0.2 % or less, Y: 0.2 % or less, and REM: 0.2 % or less,
at least one selected from Sb: 0.1 % or less, Cu: 0.5 % or less, and Sn: 0.1 % or less,
at least one selected from Ni: 0.5 % or less and Cr: 0.5 % or less, and
at least one selected from O, Se, Te, Po, As, Bi, Ge, Pb, Ga, In, Tl, Zn, Cd, Hg, Ag, Au, Pd, Pt, Co, Rh, Ir, Ru, Os, Tc, Re, Ta, Be and Sr, in a total amount of 2.0 % or less,

the balance including Fe and incidental impurities, and
wherein the steel sheet has a microstructure containing a ferrite phase by 95 % or more on an area ratio basis with respect to the entire microstructure, ferrite crystal grains constituting the ferrite phase have an average grain size of 1 μm or more, and carbides having an average particle size of 10 nm or less are dispersed and precipitated in the ferrite crystal grains

$$2.00 \geq ([\%C] / 12) / ([\%Ti] / 48) \geq 1.05 \qquad \text{Expression (1),}$$

$$2.00 \geq ([\%C] / 12) / ([\%Ti] / 48 + [\%V] / 51 + [\%W] / 184 + [\%Mo] / 96 + [\%Nb] /$$
$$93 + [\%Zr] / 91 + [\%Hf] / 179) \geq 1.05$$
$$\text{Expression (1)'}$$

where [%M] indicates the content by mass% of element M.

4. The warm press forming method according to any one of claims 1 to 3, wherein the steel sheet comprises a coating or plating layer on a surface thereof.

5. The warm press forming method according to any one of claims 1 to 4, wherein during the crash forming, the steel sheet is held at a press bottom dead point in the die for one second or more.

**Patentansprüche**

1. Warmpress-Formverfahren zum Formen eines Stahlblechs, das eine Zugfestigkeit von 440 MPa oder mehr aufweist, zu einem pressgeformten Teil, das Flanschabschnitte und andere Abschnitte beinhaltet, durch Pressformen, wobei das Verfahren umfasst:

Erhitzen des Stahlblechs auf einen Temperaturbereich von 400 °C bis höchstens 700 °C; und
dann Pressformen des erhitzten Stahlblechs durch Anwenden von Crash-Forming, um ein pressgeformtes Teil zu erhalten, derart, dass ein Unterschied der Durchschnittstemperatur zwischen Flanschabschnitten und anderen Abschnitten des pressgeformten Teils sofort nach der Bildung innerhalb von 100 °C gehalten wird.

2. Warmpress-Formverfahren nach Anspruch 1, wobei das pressgeformte Teil eine zugfestigkeit von 80 % bis 110 % einer Zugfestigkeit des Stahlblechs vor dem Pressformen aufweist.

3. Warmpress-Formverfahren nach Anspruch 1 oder 2, wobei das Stahlblech eine chemische Zusammensetzung aufweist, die in Masse-% enthält:

C: 0,015 % bis 0,16 %,
Si: 0,2 % oder weniger,
Mn: 1,8 % oder weniger,
P: 0,035 % oder weniger,
S: 0,01 % oder weniger,

Al: 0,1 % oder weniger,

N: 0,01 % oder weniger und

Ti: 0,13 % bis 0,25 %,

mit der Maßgabe, dass ein Verhältnis erfüllt ist, das durch Ausdruck (1) unten definiert ist, und wahlweise in Masse-% mindestens eins, ausgewählt aus

V: 1,0 % oder weniger,

Mo: 0,5 % oder weniger,

W: 1,0 % oder weniger,

Nb: 0,1 % oder weniger,

Zr: 0,1 % oder weniger und

Hf: 0,1 % oder weniger,

mit der Maßgabe, dass ein Verhältnis erfüllt ist, das durch Ausdruck (1)' definiert ist,

B: 0,003 % oder weniger,

mindestens eins, ausgewählt aus Mg: 0,2 % oder weniger, Ca: 0,2 % oder weniger, Y: 0,2 % oder weniger und Seltenerdmetallen: 0,2 % oder weniger,

mindestens eins, ausgewählt aus Sb: 0,1 % oder weniger, Cu: 0,5 % oder weniger und Sn: 0,1 % oder weniger,

mindestens eins, ausgewählt aus Ni: 0,5 % oder weniger und Cr: 0,5 % oder weniger, und

mindestens eins, ausgewählt aus O, Se, Te, Po, As, Bi, Ge, Pb, Ga, In, Tl, Zn, Cd, Hg, Ag, Au, Pd, Pt, Co, Rh, Ir, Ru, Os, Tc, Re, Ta, Be und Sr, in einer Gesamtmenge von 2,0 % oder weniger,

wobei der Rest Fe und zufällige Verunreinigungen beinhaltet und

wobei das Stahlblech ein Gefüge aufweist, das auf einer Basis des Flächenverhältnisses in Bezug auf das gesamte Gefüge zu 95 % oder mehr eine Ferritphase enthält, Ferritkristallkörner, welche die Ferritphase bilden, eine durchschnittliche Korngröße von 1 $\mu$m oder

mehr aufweisen und Carbide, die eine durchschnittliche Partikelgröße von 10 nm oder weniger aufweisen, in den Ferritkristallkörnern dispergiert und ausgeschieden sind.

$$2,00 \geq ([\%C]/12)/([\%Ti]/48) \geq 1,05 \qquad \text{Ausdruck (1),}$$

$$2,00 \geq ([\%C]/12)/([\%Ti]/48+[\%V]/51+[\%W]/184+[\%Mo]/96+[\%Nb]/93+[\%Zr]/91+[\%Hf]/179) \geq 1,05$$
$$\text{Ausdruck (1)'}$$

wobei [%M] den Gehalt in Masse-% von Element M angibt.

4. Warmpress-Formverfahren nach einem von Anspruch 1 bis 3, wobei das Stahlblech auf einer Fläche davon eine Beschichtung oder Überzugsschicht aufweist.

5. Warmpress-Formverfahren nach einem von Anspruch 1 bis 4, wobei das Stahlblech während des Crash-Formings eine Sekunde lang oder länger an einem unteren Totpunkt der Presse in dem Presswerkzeug gehalten wird.


**Revendications**

1. Procédé de formation par compression à chaud pour former une tôle d'acier ayant une résistance à la traction de 440 MPa ou plus en une pièce formée par compression comprenant des parties de bride et d'autres parties par formation par compression, le procédé comprenant les étapes consistant à :

chauffer la tôle d'acier dans une plage de température comprise entre 400 °C et pas plus de 700 °C ; et ensuite former par compression la tôle d'acier chauffée en utilisant une formation par chocs pour obtenir une pièce formée par compression, de telle sorte qu'une différence de température moyenne entre des parties de bride et d'autres parties de la pièce formée par compression immédiatement après la formation est maintenue à 100 °C.

2. Procédé de formation par compression à chaud selon la revendication 1, dans lequel la pièce formée par compression a une résistance à la traction comprise entre 80 % et 110 % d'une résistance à la traction de la tôle d'acier avant la formation par compression.

3. Procédé de formation par compression à chaud selon la revendication 1 ou 2, dans lequel la tôle d'acier a une composition chimique contenant, en % en masse,

C : 0,015 % à 0,16 %,
Si : 0,2 % ou moins,
Mn : 1,8 % ou moins,
P : 0,035 % ou moins,
S : 0,01 % ou moins,
Al : 0,1 % ou moins,
N : 0,01 % ou moins, et
Ti : 0,13 % à 0,25 %,
à condition qu'une relation définie par l'Expression (1) ci-dessous soit satisfaite, et de manière facultative, en % en masse, au moins un élément choisi parmi

V : 1,0 % ou moins,
Mo : 0,5 % ou moins,
W : 1,0 % ou moins,
Nb : 0,1 % ou moins,
Zr : 0,1 % ou moins, et
Hf : 0,1 % ou moins,
à condition qu'une relation définie par l'Expression (1)' soit satisfaite,
B : 0,003 % ou moins,
au moins un élément choisi parmi Mg : 0,2 % ou moins, Ca : 0,2 % ou moins, Y : 0,2 % ou moins, et REM : 0,2 % ou moins, au moins un élément choisi parmi Sb : 0,1 % ou moins, Cu : 0,5 % ou moins, et Sn : 0,1% ou moins,
au moins un élément choisi parmi Ni : 0,5 % ou moins et Cr : 0,5 % ou moins, et
au moins un élément choisi parmi 0, Se, Te, Po, As, Bi, Ge, Pb, Ga, In, Tl, Zn, Cd , Hg, Ag, Au, Pd, Pt, Co, Rh, Ir, Ru, Os, Tc, Re, Ta, Be et Sr, selon une quantité totale de 2,0 % ou moins,
le reste incluant Fe et des impuretés accidentelles, et
dans lequel la tôle d'acier a une microstructure contenant une phase de ferrite de 95 % ou plus sur une base de rapport surfacique par rapport à la microstructure entière, des grains cristalins de ferrite constituant la phase de ferrite ont une taille moyenne de grain de 1 µm ou plus, et des carbures ayant une taille moyenne de particule de 10 nm ou moins sont dispersés et précipités dans les grains cristalins de ferrite

$$2{,}00 \geq ([\%C]/12)/([\%Ti]/48) \geq 1{,}05 \qquad \text{Expression (1),}$$

$$2{,}00 \geq ([\%C]/12)/([\%Ti]/48 + [\%V]/51 + [\%W]/184 + [\%Mo]/96 +$$
$$[\%Nb]/93 + [\%Zr]/91 + [\%Hf]/179) \geq 1{,}05 \text{ Expression (1)'}$$

où [%M] indique la teneur en % en masse de l'élément M.

4. Procédé de formation par compression à chaud selon l'une quelconque des revendications 1 à 3, dans lequel la tôle d'acier comprend une couche de revêtement ou de placage sur une surface de celle-ci.

5. Procédé de formation par compression à chaud selon l'une quelconque des revendications 1 à 4, dans lequel, pendant la formation par chocs, la tôle d'acier est maintenue à un point mort bas de compression dans la matrice pendant une seconde ou plus.

FIG. 1C

FIG. 1B

FIG. 1A

## FIG. 2A

## FIG. 2B

FIG. 3A  FIG. 3B  FIG. 3C

# FIG. 4

## *FIG. 5A*

## *FIG. 5B*

# FIG. 6A

# FIG. 6B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005205416 A

- JP 2006212663 A